(19) Europäisches Patentamt
European Patent Office
Office européen des brevets

(11) Publication number: **0 038 187**
**B1**

# (12) EUROPEAN PATENT SPECIFICATION

(45) Date of publication of patent specification: **05.10.83**

(51) Int. Cl.$^3$: **B 23 P 1/12**

(21) Application number: **81301575.7**

(22) Date of filing: **10.04.81**

## (54) Improvements in or relating to a wire-cut, electric discharge machine.

(30) Priority: **14.04.80 JP 48969/80**

(43) Date of publication of application:
**21.10.81 Bulletin 81/42**

(45) Publication of the grant of the patent:
**05.10.83 Bulletin 83/40**

(84) Designated Contracting States:
**CH DE FR GB LI**

(56) References cited:
**DE - A - 2 052 178**
**DE - A - 2 303 842**
**DE - A - 2 357 519**
**DE - A - 2 721 804**
**DE - A - 2 906 245**
**DE - A - 2 914 368**
**DE - A - 2 922 922**
**GB - A - 2 026 368**

(73) Proprietor: **Fanuc Ltd**
**5-1, Asahigaoka, 3-chome**
**Hino-shi, Tokyo 191 (JP)**

(72) Inventor: **Nomura, Yoshiyuki**
**No. 3-27, Tamadaira Hino-shi**
**Hino-Shataku 103 Tokyo 191 (JP)**

(74) Representative: **Billington, Lawrence Emlyn et al,**
**HASELTINE LAKE & CO Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 038 187 B1

# Improvements in or relating to a wire-cut, electric discharge machine

The present invention relates to improvements in or relating to a wire-cut, electric discharge machine provided with a mechanism for automatically installing a wire electrode on its travelling system.

A wire-cut, electric discharge machine is advantageous in that it is capable of machining, for example, a metal mold of complicated configuration with high accuracy through the use of a thin wire electrode, but it has the defect of low cutting speed. For substantial reductions of the personnel expenditure for long-time operations, full automation of the wire-cut, electric discharge machine is now in progress. An automatic wire threading mechanism which is suitable for continuous, unattended machining of many independent configurations in the same work has also been proposed for unattended operations of the wire-cut, electric discharge machine. The arrangement of a prior art example of such a mechanism is shown in Fig. 1. In Fig. 1, reference numeral 1 indicates a work; 1a designates a machining starting hole; 2 identifies a wire serving as a working electrodes; 3 denotes a supply reel; 4 represents a tension brake; 5 and 6 show guide rollers; 7a and 7b refer to feed-up rollers; 8 and 9 indicate guides; 10 designates a wire clamp; 11a and 11b identify upper feed roller; and 12 denotes a take-up reel.

For automatic threading of the wire 2 in Fig. 1, the wire 2 delivered from the supply reel 3 and drawn across the tension brake 4 and the guide rollers 5 and 6 is gripped by the two feed-up rollers 7a and 7b to run therethrough in to the machining starting hole 1a of the work 1. The wire 2 thus brought up to project upwardly of the work 1 is pulled up by the wire clamp 10 to the upper feed rollers 11a and 11b, by which the wire 2 is fed to be taken up on the take-up reel 12.

Since the automatic wire threading mechanism has been devised for unattended operations of the wire-cut, electric discharge machine, the wire threading operation must be achieved with certainty. With the conventional arrangement, however, when the wire 2 is brought up by the feed-up rollers 7a and 7b into the working start hole 1a after being drawn across the tension brake 4 and the guide rollers 5 and 6, there is the possibility that the wire 2 is not accurately inserted into the machining starting hole 1a, or even if inserted, it cannot perpendicularly go up the machining starting hole 1a, resulting in a faulty operation. This makes it difficult to carry out unattended operations of the wire-cut, electric discharge machine, for example, during the night. It has recently been proved, however, that such a faulty operation is caused by curling of the wire.

Accordingly, it is an object of the present invention to provide a wire-cut, electric discharge machine provided with an automatic wire threading mechanism which is designed to ensure the automatic wire threading operation by straightening out a wire in the wire travelling system.

According to the present invention, there is provided a wire-cut electric discharge machine provided with a mechanism for automatically installing a wire electrode in its travelling system, wherein a straightening guide having a curved surface for guiding thereacross the wire electrode while straightening it out is provided in front of feed rollers for gripping the wire electrode paid out from a supply reel and for guiding it into a machining starting hole of a work when the machine is in use.

For a better understanding of the invention and to show how it may be put into effect, reference will now be made by way of example to the accompanying drawings in which:

Fig. 1, already described, is a schematic diagram showing the arrangement of a conventional wire-cut, electric discharge machine provided with an automatic wire threading machine.

Fig. 2 is a schematic diagram, similar to Fig. 1, illustrating the principal part of an embodiment of wire-cut, electric discharge machine of the present invention;

Fig. 3 is a schematic diagram illustrating the principal part of another embodiment of the present invention;

Figs. 4 and 6 are partially enlarged diagrams explanatory of the embodiment of Fig. 3, Fig. 4 being a front view, Fig. 5 a top plan view and Fig. 6 a side view;

Fig. 7 is a schematic diagram showing the principal part of another embodiment of the present invention; and

Fig. 8 is an enlarged diagram of one part of the embodiment depicted in Fig. 7.

Fig. 2 schematically illustrates the principal part of an embodiment of the present invention, in which components corresponding to those in Fig. 1 are identified by the same reference numerals. Reference numeral 20 indicates a wire straightening guide.

The wire-cut electric discharge machine of the present embodiment differs from the prior art example of Fig. 1 in that the wire straighten ing guide 20 is provided right in front of the feed-up rollers 7a and 7b which grip therebetween the wire 2 paid out from the supply reel 3 and guide the wire 2 to pass it through the machining starting hole 1a of the work 1. The wire straightening guide 20 has a curved surface and is mounted on a mounting plate (not shown) in such a manner that the curved surface is urged against the wire 2 from the left-hand direction in Fig. 2. The reason for which the curved surface of the wire straightening guide 20 is pressed against the wire 2 from the left-hand direction is that, in the illustrated embodiment, since the wire 2 is subjected to clockwise bending by the supply reel 3 and the guide rollers 5 and 6, it is necessary to bend the wire 2 counterclockwise for correcting it. Accordingly, in a wire travelling system in which the wire is bent in a direction reverse from that in the above, the wire straightening guide 20 is disposed on the right of the wire 2, with the curved surface directed thereto.

With such an arrangement, the wire 2 runs across the curved surface of the wire straightening guide 20 while bending counterclockwise, by which its clockwise bending is removed, ensuring that the wire 2 goes up vertically running between the feed-up rollers 7a and 7b. In consequence, the wire 2 smoothly passes through the machining startimg hole 1a without striking against the underside of the work 1. Thus, the wire 2 can automatically be installed in the wire travelling system.

The strength of curl of the wire 2 differs according to the material and diameter of the wire and the arrangement of the wire travelling system. Accordingly, an optimum wire straightening effect can be produced by mounting the wire straightening guide 20 so that it is adjustable in the directions of arrows in Fig. 2 in accordance with the wire used. In this embodiment, the wire staightening guide 20 is not such a rotating member as the guide rollers 5 and 6 but a fixed pin.

Fig. 3 illustrates another embodiment of the present invention, which employs a rotating guide roll as the wire straightening guide.

The wire 2 is stretched between a straightening roll 31 and a guide 32 and fed upwardly. On a line connecting a wire electrode outgoing point A on the outer periphery of the straightening roll 31 and a wire electrode supporting point B on the guide 32, a guide roller 33 is disposed in such a manner as to press the wire 2 apart from the abovesaid line.

In the embodiment of Fig. 3, the wire 2 which has not reached the straightening roll 31 has a bend that tends to make the wire 2 deviate to the left from the abovesaid line in the path between the points A and B, but since a wire electrode guide point C of the guide roller 33 lies on the right of the line connecting the points A and B, the abovementioned bend of the wire 2 is removed while it travels from the point A to B via the point C.

In Fig. 3, reference numeral 30 indicates a hold roller which prevents the wire 2 from falling off the straightening roll 31 when the wire 2 is broken.

Figs. 4 to 6 are partially enlarged diagrams of the embodiment shown in Fig. 3.

As will be seen from Figs. 4 to 6, a sub-base 35 is fixedly mounted on a stationary base 34 by means of a pair of bolts 36 and 37 and a slider 38 is provided in a space defined by the top surface of the base 34 and the front of the sub-base 35. The slider 38 has a pair of horizontally extending guide holes 39 and 40 and is fixed to the sub-base 35 by a pair of bolts 41 and 42 which are threadably engaged with the sub-base 35 through the guide holes 39 and 40, respectively. On the slider 38 is rotatably supported the straightening roll 31 and the hold roller 30 is also rotatably supported on an arm 44 which is rotatable about a shaft 43 planted on the slider 38. By a spring 45 stretched between the arm 44 and the slider 38, the hold roller 30 is biased to be urged against the straightening roll 31.

The guide roller 33 is rotatably supported by a shaft 46 fixedly screwed into the sub-base 35.

Accordingly, by loosening the pair of bolts 41 and 42, the slider 38 can be slid to right and left on the base 34 to permit adjustment of the relative positions of the points A, B and C referred to previously in respect of Fig. 3. By tightening the bolts 41 and 42 after moving the slider 38 to a proper position, the straightening roll 31 can be positioned. Reference numerals 47, 48 and 49 identify bearing caps.

The rollers 30 and 33 and the straightening roll 31 are formed of a plastic material which has a high degree of insulation and wear resistance.

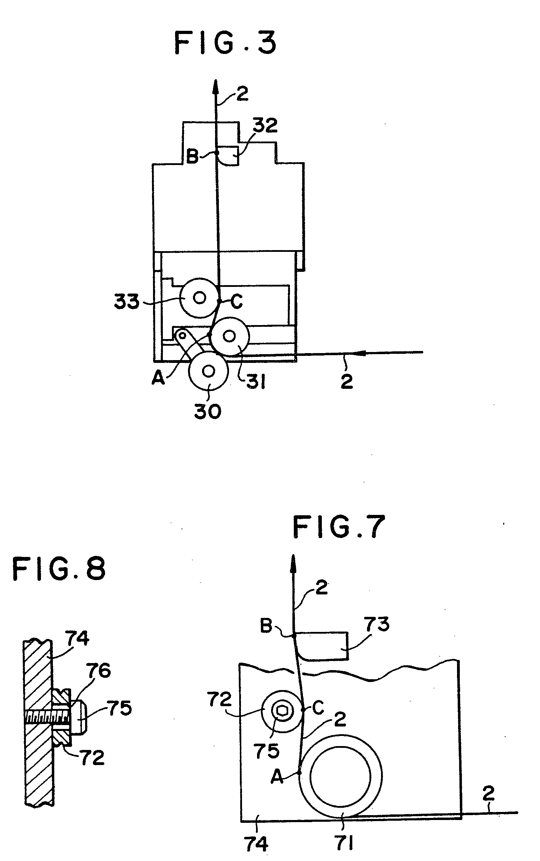

Fig. 7 illustrates another embodiment of the present invention. The wire 2 is fed upwardly via a guide roller 71, a straightening roll 72 and a guide 73. The straightening roll 72 is fixed by a bolt 75 to a base 74, as shown in Fig. 8. Between the outer diameter of the bolt 75 and the inner diameter of the straightening roll 72 exists a clearance 76 of a suitable size. Loosening the bolt 75, the position of the straightening roll 72 can be adjusted. This embodiment differs from the embodiment of Fig. 3 in that the straightening roll 72 does not rotate by itself and can be adjusted in position. The roll 72 and the roller 71 are formed of a highly insulating and wear-resisting plastic material.

As will be appreciated from the foregoing, a bend of the wire electrode is eliminated by a simple-structured straightening guide provided right in front of the fced-up rollers and the wire electrode is fed perpendicularly from the feed-up rollers, in consequence of which the wire electrode is automatically installed with certainty. Accordingly, the present embodiments permit long-time, unattended operations of the wire-cut, electric discharge machine and hence is of great utility. The foregoing embodiments should be construed as being merely illustrative of the present invention and should not be construed in a limiting sense.

It will be apparent that many modifications and variations may be effected without departing from the scope of the claims.

**Claims**

1. A wire-cut electric discharge machine provided with a mechanism for automatically installing a wire electrode (2) in its travelling system, wherein a straightening guide (20) having a curved surface for guiding thereacross the wire electrode (2) while straightening out is provided in front of feed rollers (7a, 7b) for gripping the wire electrode (2) paid out from a supply reel (3) and for guiding it into a machining starting hole (1a) of a work (1) when the machine us in use.

2. A machine according to claim 1, wherein the straightening guide (20) is provided immediately in front of said feed rollers (7a, 7b).

3. A machine according to claim 1 or 2, wherein said feed rollers (7a, 7b) are arranged for guiding the wire electrode (2) upwards into said hole (1a).

4. A machine according to any one of the preceding claims, wherein the position of the straightening guide (20) is adjustable across the direction of longitudinal extent of the wire electrode (2).

**Patentansprüche**

1. Schneidedrahtmaschine mit elektrischer Entladung mit einer Einrichtung zur automatischen Einführung einer Drahtelektrode (2) in ihr Vorschubsystem, dadurch gekennzeichnet, daß eine Führung (20) zum Geraderichten mit einer gebogenen Oberfläche über die die Drahtelektrode (2) beim Geraderichten geführt wird, frontal vor Vorschubrollen (7a, 7b) vorgesehen ist, um die Drahtelektrode (2) zu erfassen, die von einer Vorratsrolle (3) abgerollt wird, und um sie in eine Öffnung (1a) in einem Werkstück (1) zu Aufnahme der Bearbeitung einzuführen, wenn die Maschine in Betrieb ist.

2. Maschine nach Anspruch 1 dadurch gekennzeichnet, daß die Führung (20) zum Geraderichten unmittelbar vor den Vorschubrollen (7a, 7b) angeordnet ist.

3. Maschine nach Anspruch 1 oder 2 dadurch gekennzeichnet, daß die Vorschubrollen (7a, 7b) so angeordnet sind, daß sie die Drahtelektrode (2) aufwärts in die Öffnung (1a) führen.

4. Maschine nach einem der vorhergehenden Ansprüche dadurch gekennzeichnet, daß die Stellung der Führung (20) zum Geraderichten quer zur Längserstreckung der Drahtelektrode (2) verstellbar ist.

**Revendications**

1. Une machine d'électro-érosion fil coupant équipée d'un mécanisme pour installer automatiquement un fil d'électrode (2) dans son système d'entraînement, dans laquelle un guide de redressement (20) ayant une surface courbe destinée à guider le fil d'électrode (2) tout en le redressant est établie en avant de galets d'avance (7a, 7b) destinés à saisir le fil d'électrode (2) débité par une bobine débitrice (3) et à le guider pour l'introduire dans un trou de départ d'usinage (1a) d'une pièce à usiner (1), lorsque la machine est utilisée.

2. Une machine selon la revendication dans laquelle le guide de redressement (20) est placé immédiatement en avant des galets d'avance (7a, 7b).

3. Une machine selon la revendication 1 ou 2, dans laquelle les galets d'avance (7a, 7b) sont disposés de façon à guider le fil d'électrode (2) vers le haut en le faisant pénétrer dans ledit trou (1a).

4. Une machine selon l'une quelconque des revendications précédentes, dans laquelle la position du guide de redressement (20) est réglable transversalement par rapport à la direction longitudinale du fil d'électrode (2).

FIG. 1

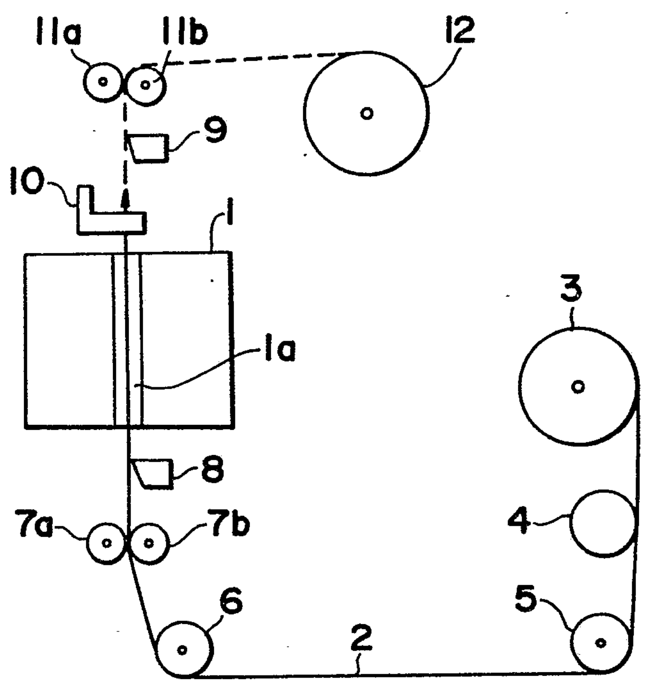


FIG. 2

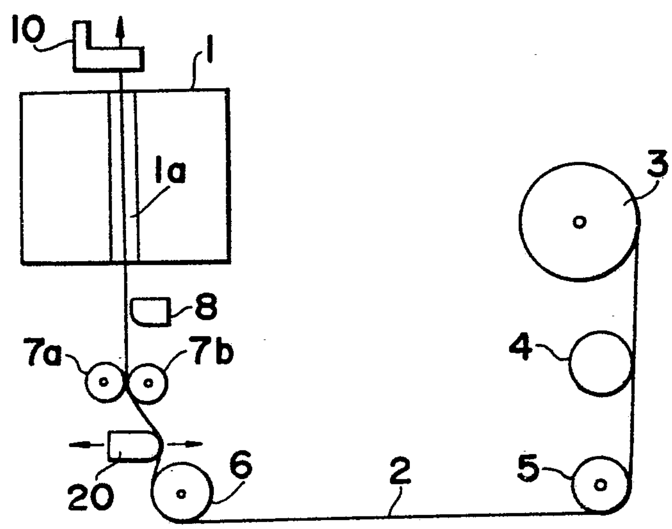

FIG.4

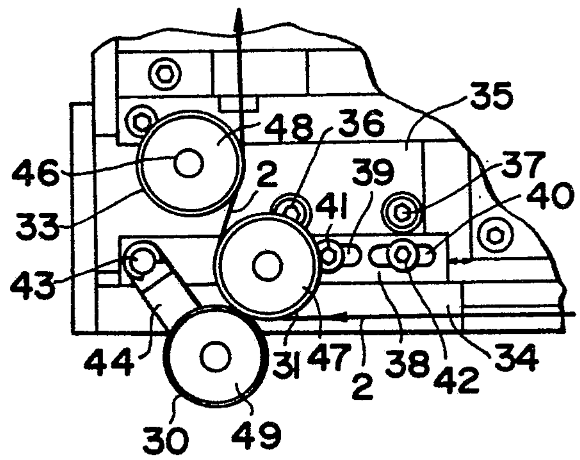


FIG.5

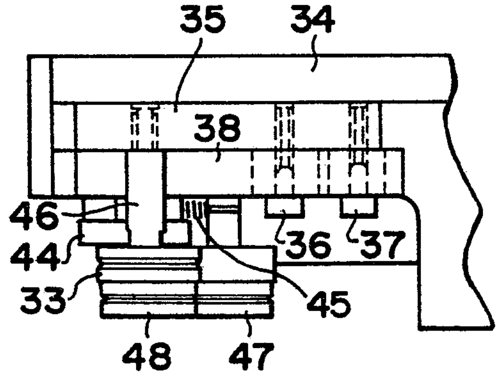


FIG.6

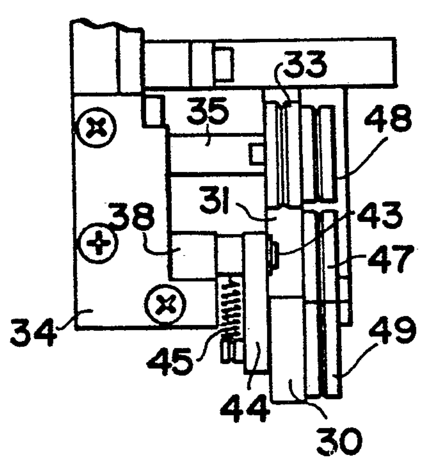

FIG. 3

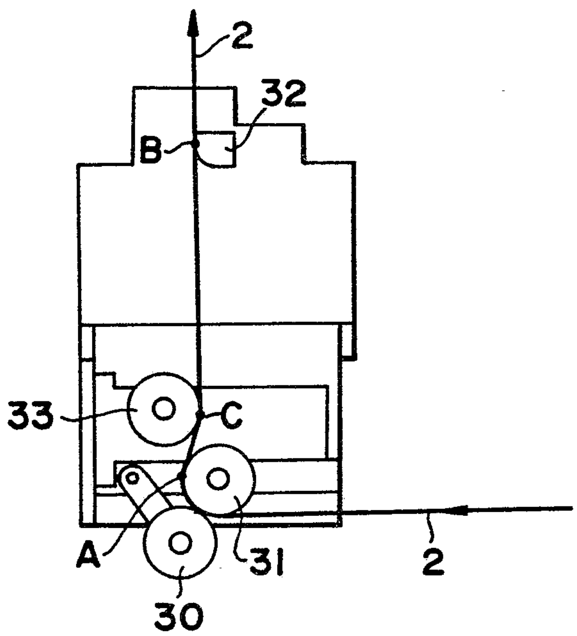


FIG. 8

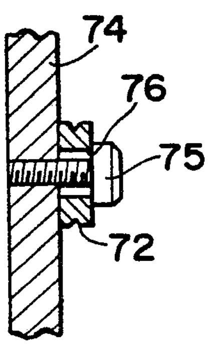


FIG. 7